# FASCICULE DE BREVET EUROPEEN

(11) **EP 3 234 536 B1**
(45) Date de publication et mention de la délivrance du brevet: **05.01.2022**
(21) Numéro de dépôt: 15810757.3
(22) Date de dépôt: 18.12.2015
(51) Int. Cl.: G01L 23/08

(54) **CAPTEUR DE PRESSION DYNAMIQUE A FONCTIONNEMENT AMELIORE**
DYNAMISCHER DRUCKSENSOR MIT VERBESSERTEM BETRIEB
DYNAMIC PRESSURE SENSOR WITH IMPROVED OPERATION

(30) Priorité: 18.12.2014 FR 1462718
(43) Date de publication de la demande: 25.10.2017
(73) Titulaire: Commissariat à l'Énergie Atomique et aux Énergies Alternatives, 75015 Paris (FR)
(72) Inventeur: FAIN, Bruno, 38000 Grenoble (FR); ROBERT, Philippe, 38000 Grenoble (FR); VERDOT, Thierry, 38120 Saint Egreve (FR)
(74) Mandataire: Brevalex
(86) Numéro de dépôt international: PCT/EP2015/080511
(87) Numéro de publication internationale: WO 2016/097302

(56) Documents cités:
- EP-A1- 2 410 767
- EP-A1- 2 541 222
- EP-A2- 2 066 015
- US-B1- 6 170 332
- US-B1- 6 497 149
- BERNHARD E BOSER ET AL: "Surface Micromachined Accelerometers", IEEE JOURNAL OF SOLID-STATE CIRCUITS, IEEE SERVICE CENTER, PISCATAWAY, NJ, USA, vol. 31, no. 3, 1 mars 1996 (1996-03-01), XP011060223, ISSN: 0018-9200
- DIRK SCHEIBNER ET AL: "Frequency-selective silicon vibration sensor with direct electrostatic stiffness modulation", PROCEEDINGS OF SPIE, vol. 4755, 19 avril 2002 (2002-04-19), pages 325-332, XP055225467, US ISSN: 0277-786X, DOI: 10.1117/12.462827 ISBN: 978-1-62841-839-2
- None

## Description

### DOMAINE TECHNIQUE ET ÉTAT DE LA TECHNIQUE ANTÉRIEURE

La présente invention se rapporte à un capteur de pression à fonctionnement amélioré, en particulier un capteur de pression MEMS et/ou NEMS, par exemple pour des applications à la réalisation de microphones.

Le document EP 2 410 767 décrit un capteur de pression dynamique MEMS par exemple pour la réalisation d'un microphone. Ce capteur de pression comporte une cavité déformable pour recevoir des variations de pression de l'environnement, la cavité est réalisée dans un substrat et l'une de ses parois est mobile dans une direction parallèle au plan du substrat. Il comporte également des moyens de détection du déplacement de la paroi, par exemple de type piézorésistif ou capacitif. Ce capteur de pression à déplacement dans le plan présente l'avantage de séparer la partie détection de la paroi de détection sensible à la pression acoustique. Il est alors possible d'optimiser l'une et l'autre, le capteur présente ainsi des performances améliorées.

Ce capteur de pression impose cependant de trouver un compromis entre bande passante et résolution ; de plus, la gamme de fonctionnement est restreinte par la configuration de la partie mécanique des moyens de détection, ce qui limite les possibilités d'améliorer la résolution et d'augmenter la pleine échelle, dans une application à un microphone il s'agit de la différence entre la pression acoustique maximale pouvant être mesurée, i.e. le niveau sonore que le microphone est capable d'enregistrer sans saturer, et la pression acoustique minimale susceptible d'être mesurée

### EXPOSÉ DE L'INVENTION

C'est par conséquent un but de la présente invention d'offrir un capteur de pression à déplacement ou déformation dans le plan présentant un fonctionnement amélioré.

Le but de la présente invention est atteint par un capteur de pression à déplacement ou déformation dans le plan comportant une partie mobile ou déformable selon une direction parallèle au plan du capteur sous l'effet d'une variation de pression, des moyens de détection du déplacement ou de la déformation de la partie mobile et des moyens d'asservissement en déplacement ou en déformation de l'élément sensible à partir des mesures des moyens de détection.

En mettant en œuvre un tel asservissement, la réalisation du capteur et son fonctionnement ne sont plus limités par les compromis gain/bande passante et gain mécanique/gamme dynamique des capteurs à détection dans le plan de l'état de la technique.

De préférence, les moyens d'asservissement sont distincts des moyens de détection.

De préférence, les moyens d'asservissement sont de type capacitif, mais en variante les moyens d'asservissement peuvent être de type piézoélectrique.

De manière avantageuse, on met en œuvre des moyens pour diminuer la raideur mécanique de l'élément sensible par des moyens électrostatiques, également désignés par "moyens pour appliquer un trimming à l'élément sensible", ce trimming permettant d'améliorer sensiblement les performances du capteur.

De préférence, dans le cas où en plus des moyens d'asservissement, des moyens de trimming sont mis en œuvre, des électrodes sont dédiées à l'asservissement et des électrodes sont dédiées au trimming.

Selon l'invention, l'élément sensible comporte un logement recevant au moins une partie des électrodes d'asservissement, ainsi elles appliquent la pression électrostatique sur des faces de l'élément sensible différentes de celle qui sont soumises à la variation de pression à mesurer. Les électrodes d'actionnement n'induisent alors pas de perte de charge en amont et en aval de la structure mobile, l'amont étant du côté où s'applique la pression acoustique à mesurer, par exemple l'atmosphère. La sensibilité du capteur n'est alors pas réduite.

De manière très avantageuse, au moins une des électrodes d'actionnement est structurée pour réduire l'amortissement visqueux.

Le capteur permet de mesurer des variations de pression, par exemple des variations de pression acoustique pour réaliser un microphone.

La présente invention a alors pour objet un capteur de pression de type MEMS et/ou NEMS selon la revendication 1.

Par exemple, les premiers moyens d'actionnement sont de type capacitif, lesdits moyens d'actionnement étant portés en partie par la partie fixe et en partie par la partie mobile.

De manière avantageuse, le capteur de pression comporte des deuxièmes moyens d'actionnement de type capacitif de la partie mobile, lesdits moyens d'actionnement étant portés en partie par la partie fixe et en partie par la partie mobile, et des deuxièmes moyens de commande des deuxièmes moyens d'actionnement pour effectuer un trimming de l'élément.

Dans un exemple de réalisation, les premiers moyens d'actionnement et deuxièmes moyens d'actionnement sont distincts.

Dans un autre exemple de réalisation, les premiers et deuxièmes moyens d'actionnement sont confondus, un signal de polarisation comprenant une composante alternative issue des premiers moyens de commande et une composante continue issue des deuxièmes moyens de commande leur est alors appliqué.

La partie mobile peut être articulée en rotation par rapport à la partie fixe autour d'un axe perpendiculaire au plan du capteur.

Selon une caractéristique additionnelle, les moyens de détection sont choisis parmi des moyens de type piézorésistif ou de type capacitif. Lorsque les moyens de détection sont de type capacitif, ils peuvent être distincts des premiers et/ou deuxièmes moyens d'actionnement

Les premiers et/ou les deuxièmes moyens d'actionnement peuvent comporter au moins deux paires d'électrodes, chaque paire comprenant une électrode fixe portée par la partie fixe et une électrode mobile en regard, portée par la partie mobile.

Dans un mode de réalisation, l'élément sensible comporte une face soumise auxdites variations de pression, dite face sensible, et comporte au moins un logement délimité entre deux parois parallèles de l'élément sensible dont une paroi porte la face sensible, tout ou partie des électrodes fixes étant disposées dans ledit logement et tout ou partie des électrodes mobiles étant situées sur les faces internes des parois du logement.

Dans un exemple avantageux, l'élément sensible comporte un fond reliant les deux parois parallèles, ledit fond comportant au moins un passage traversant. Avantageusement, le capteur de pression peut alors comportant au moins un pilier pour relier mécaniquement au moins une des électrodes fixes à la partie fixe à travers le passage traversant.

De préférence, au moins une des électrodes d'actionnement est structurée de sorte à faciliter l'échappement du milieu ambiant de l'espace délimité entre une électrode fixe et une électrode mobile.

Selon une caractéristique additionnelle, chaque électrode fixe peut être connectée à un plot de connexion électrique au niveau d'une extrémité longitudinale de celle-ci ou à un plot de connexion électrique dans une partie intermédiaire entre les deux extrémités longitudinales de celle-ci.

Dans un exemple de réalisation, l'élément sensible est articulé au niveau d'au moins une extrémité longitudinale.

L'élément sensible peut être disposé entre au moins une première cavité connectée à l'environnement dont on souhaite mesurer les variations de pression et au moins une deuxième cavité tampon en communication avec la première cavité.

Le capteur de pression peut comporter deux premières cavités distinctes connectées à l'environnement dont on souhaite mesurer la variation de pression et deux deuxièmes cavités tampons, l'élément sensible étant soumis aux variations de pression des deux cavités.

L'axe de rotation de l'articulation en rotation peut se situer entre les deux extrémités longitudinales de l'élément sensible, de préférence à égale distance des deux extrémités.

Les moyens de détection sont avantageusement tels qu'ils permettent une mesure différentielle.

Dans un autre mode de réalisation, tout ou partie des électrodes d'actionnement fixes peuvent être disposées de part et d'autre de l'élément sensible.

L'élément sensible peut comporter une face soumise aux variations de pression que l'on souhaite mesurer, dite face sensible, l'une des électrodes d'actionnement fixes étant en regard de la face sensible.

La partie mobile comporte par exemple au moins deux poutres parallèles à l'élément sensible et disposées à distance de celui-ci, des faces desdites poutres parallèles face à la face sensible formant tout ou partie des électrodes mobiles.

Par exemple, le substrat comporte un substrat support et un substrat capot, la première cavité étant connectée à l'environnement dont on souhaite mesurer les variations de pression par une ouverture du substrat capot, la deuxième cavité comportant une ouverture dans le substrat support à l'opposé de l'ouverture de la première cavité ou une ouverture latérale ou la deuxième cavité présentant un volume suffisant pour ne pas amortir le déplacement de la partie mobile.

La présente invention a également pour objet un capteur de pression selon la présente invention formant un capteur de pression dynamique.

La présente invention a également pour objet un microphone comprenant au moins un capteur de pression selon la présente invention.

### BRÈVE DESCRIPTION DES DESSINS

La présente invention sera mieux comprise sur la base de la description qui va suivre et des dessins en annexe sur lesquels:
- les figures 1A et 1B sont des vues de dessus et en coupe suivant le plan I-I respectivement d'un exemple de réalisation d'un premier mode de réalisation d'un capteur de pression,
- les figures 2A et 2B sont des vues de dessus et en coupe suivant le plan II-II respectivement d'un autre exemple de réalisation du premier mode de réalisation d'un capteur de pression,

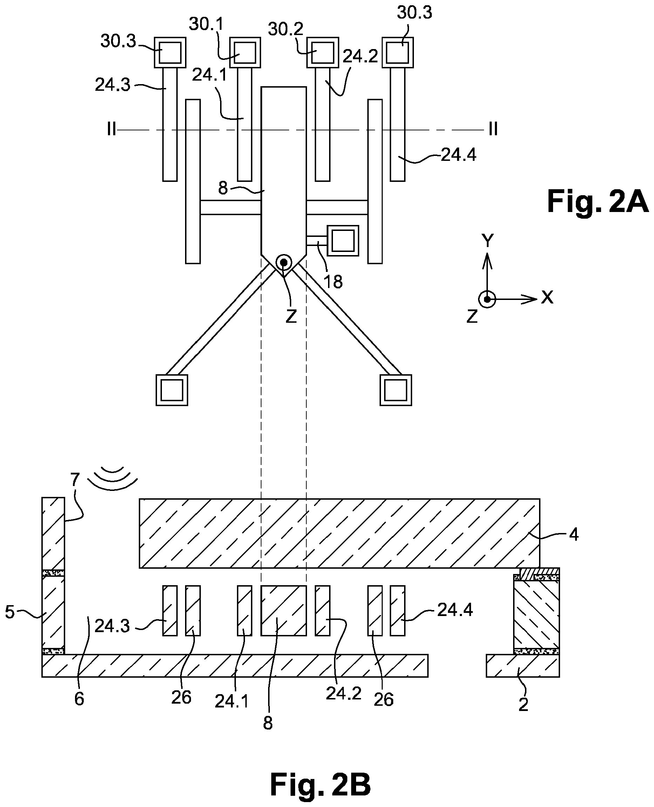

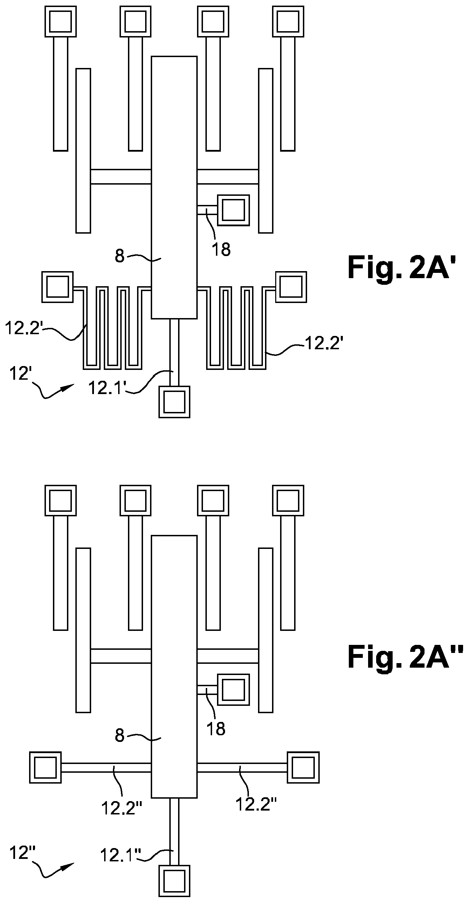

- les figures 2A' et 2A" sont des vues de dessus représentées schématiquement de variantes de réalisation du capteur de la figure 2A,

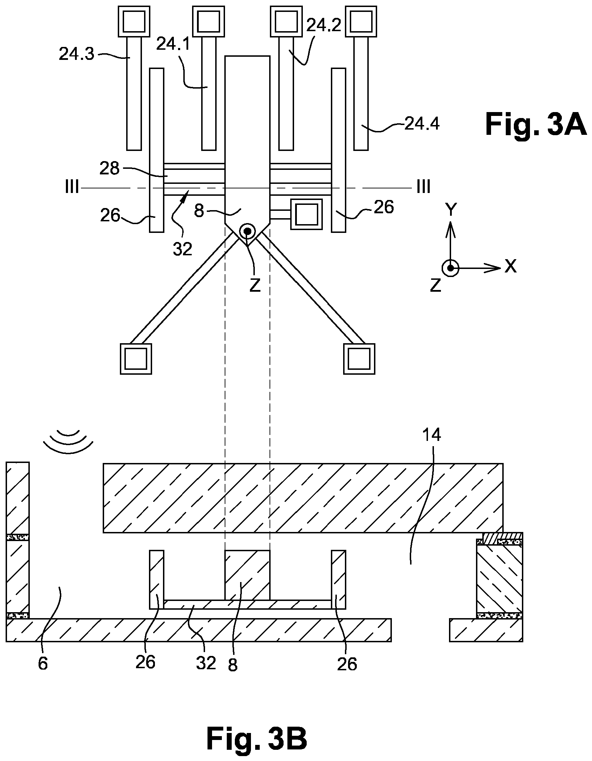

- les figures 3A et 3B sont des vues de dessus et en coupe suivant le plan III-III respectivement d'un autre exemple de réalisation du premier mode de réalisation d'un capteur de pression,

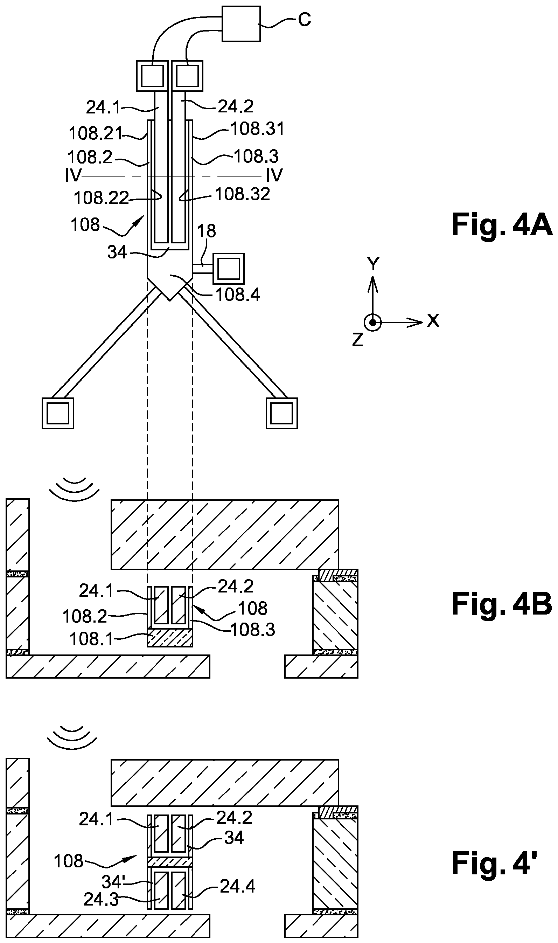

- les figures 4A et 4B sont des vues de dessus et en coupe suivant le plan IV-IV respectivement d'un exemple de réalisation d'un deuxième mode de réalisation d'un capteur de pression,
- la figure 4' est une vue en coupe transversale d'une variante de réalisation de l'exemple des figures 4A et 4B,

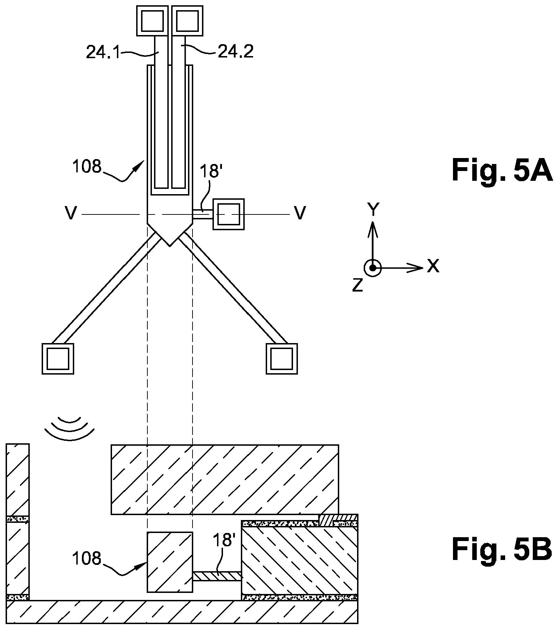

- les figures 5A et 5B sont des vues de dessus et en coupe suivant le plan V-V du capteur de pression des figures 4A et 4B dans lequel une jauge piézorésistive est amincie,

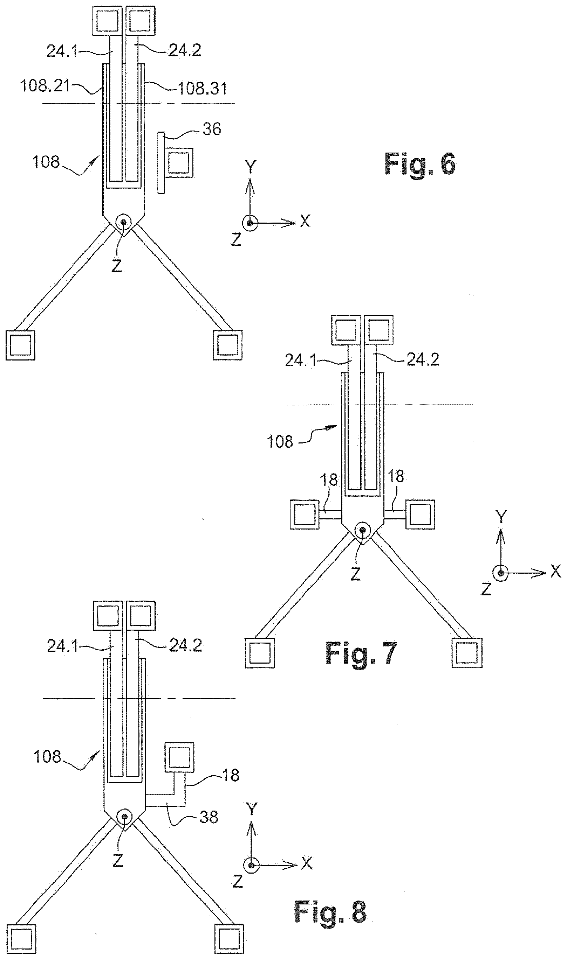

- la figure 6 est une vue de dessus d'une variante du capteur des figures 4A et 4B à détection capacitive,
- la figure 7 est une vue de dessus d'une variante du capteur des figures 4A et 4B à détection piézorésistive mettant en œuvre deux jauges piézorésistives,
- la figure 8 est une vue de dessus d'une variante du capteur des figures 4A et 4B à détection piézorésistive présentant une orientation de la jauge piézorésistive parallèle à l'élément de détection,

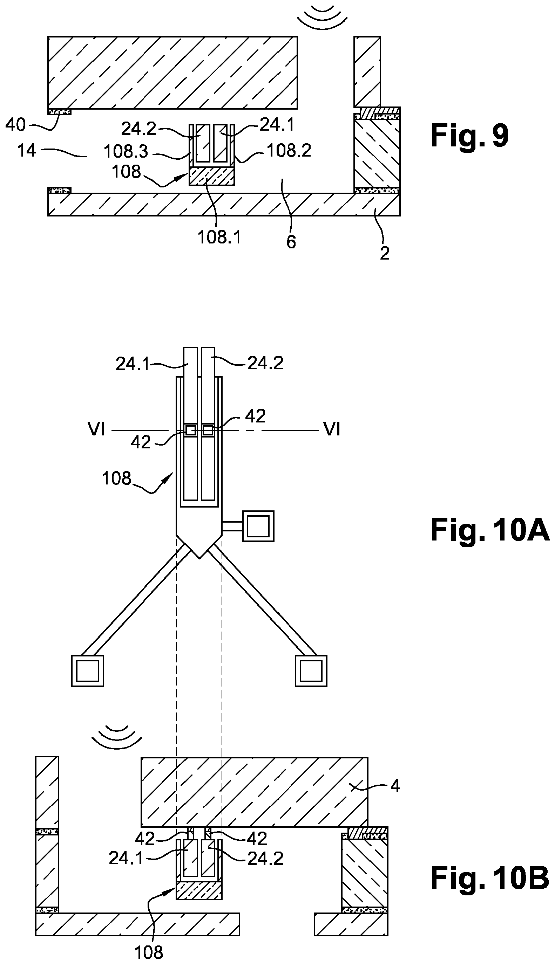

- la figure 9 est une vue en coupe transversale d'une variante de réalisation du deuxième mode de réalisation présentant une ouverture latérale,
- les figures 10A et 10B sont des vues de dessus et en coupe suivant le plan VI-VI respectivement d'un autre exemple de réalisation du deuxième mode de réalisation dans lequel les contacts électriques des électrodes d'actionnement sont situés au niveau d'une partie médiane des électrodes,

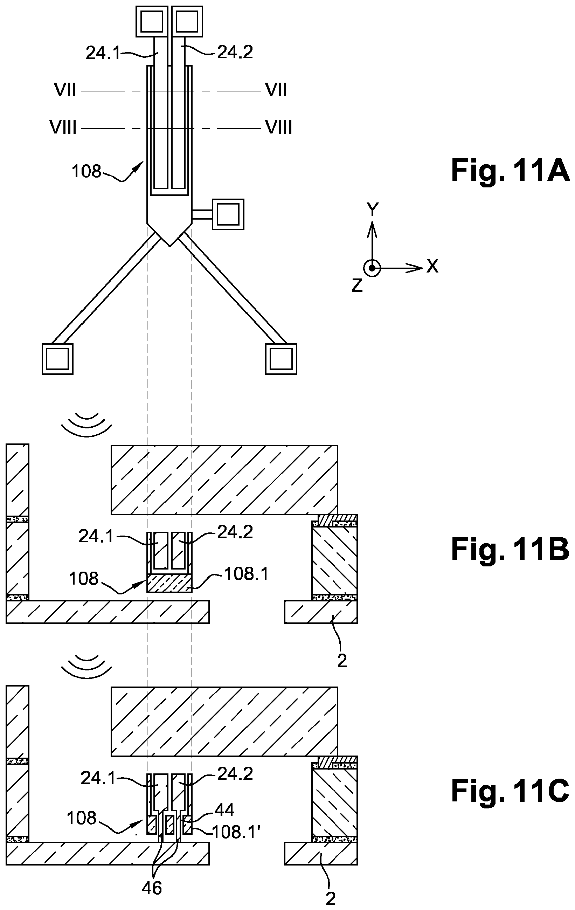

- les figures 11A, 11B, et 11C sont des vues de dessus et en coupe suivant le plan VII-VII et VIII-VIII respectivement d'un autre exemple de réalisation du deuxième mode de réalisation dans lequel les électrodes d'actionnement sont solidaires du substrat support,

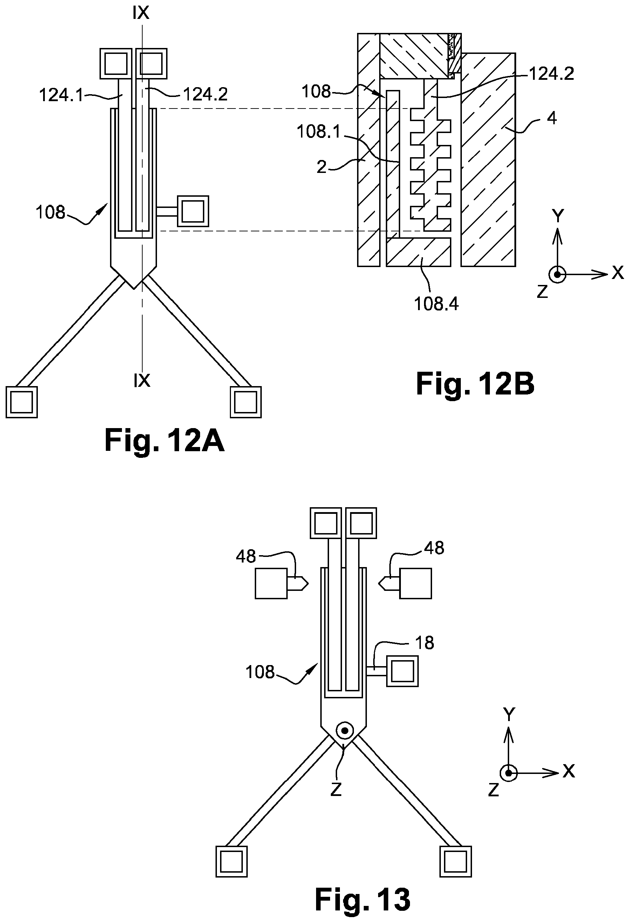

- les figures 12A et 12B sont des vues de dessus et en coupe suivant le plan IX-IX respectivement d'un autre exemple de réalisation du deuxième mode de réalisation dans lequel l'élément sensible est structuré,
- la figure 13 est une vue de dessus d'un autre exemple de réalisation du deuxième mode de réalisation comportant des butées,

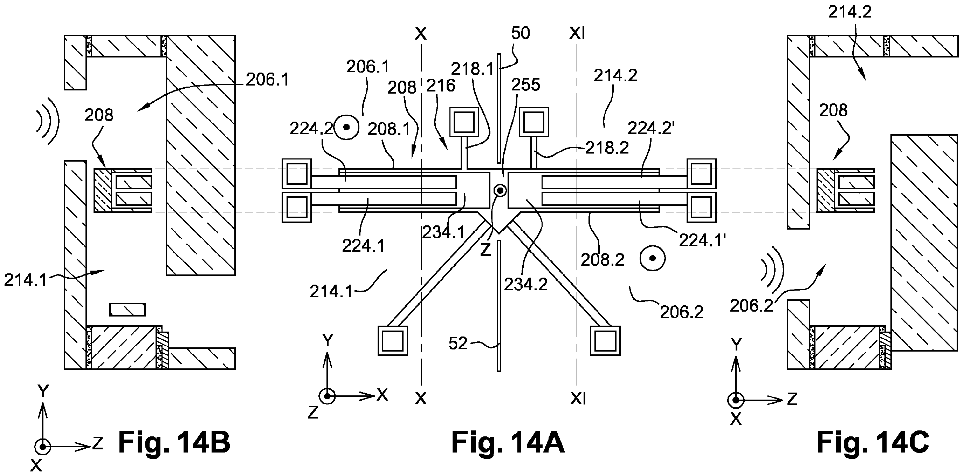

- la figure 14A est une vue de dessus d'un autre exemple selon le deuxième mode de réalisation d'un capteur dans lequel l'élément sensible est articulé en rotation au niveau de son centre de gravité,
- les figures 14B et 14C sont des vues en coupe suivant les plans X-X et XI-XI du capteur de la figure 14A,

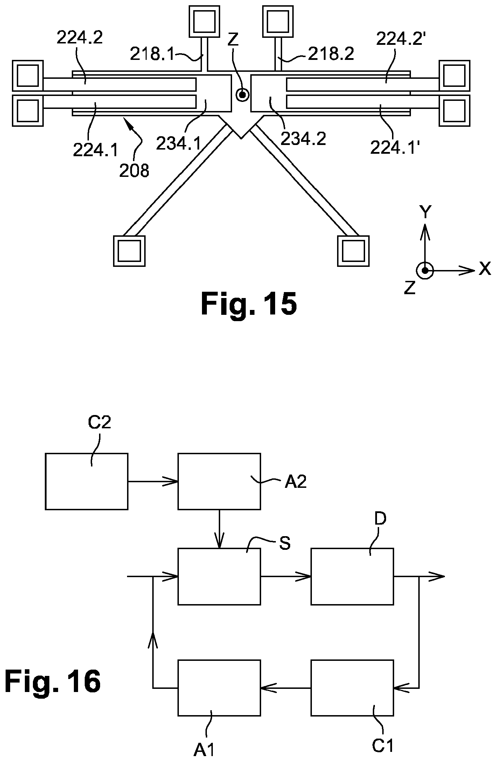

- la figure 15 est une vue de dessus d'un autre exemple selon le deuxième mode de réalisation d'un capteur dans lequel l'élément sensible est articulé en rotation au niveau de son axe de symétrie et des moyens de trimming sont mis en œuvre.
- la figure 16 est une représentation d'un schéma-bloc de l'asservissement en position du capteur de pression à déplacement ou déformation dans le plan

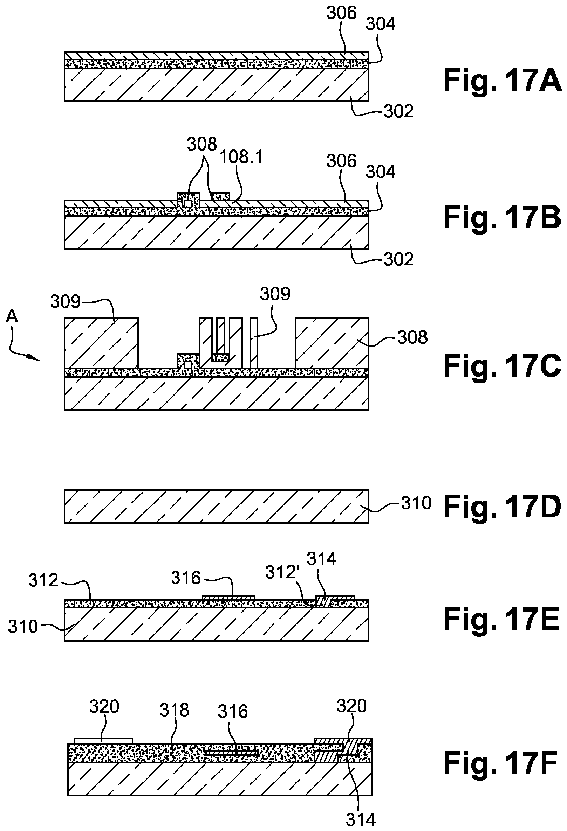

- les figures 17A à 17I sont des vues en coupe schématiques d'éléments obtenues lors des différentes étapes de réalisation d'un exemple d'un procédé de réalisation d'un capteur selon l'invention,

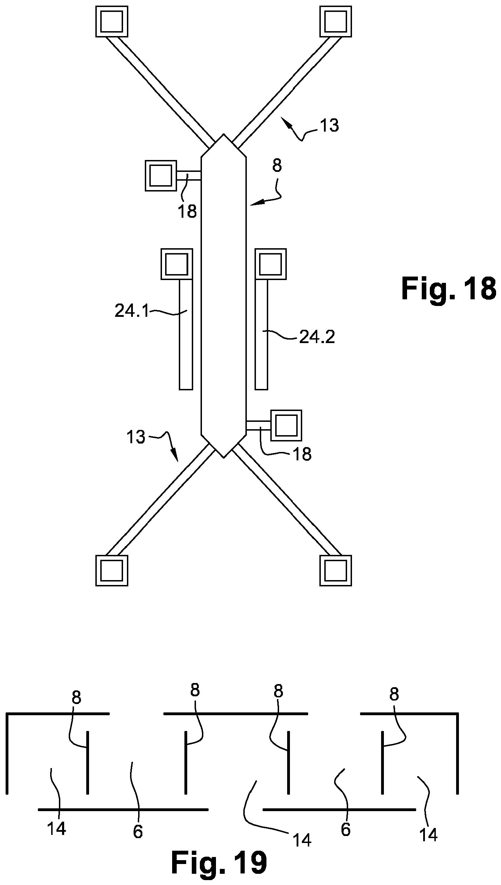

- la figure 18 est une vue de dessus représentée schématiquement d'une variante de réalisation du capteur de pression comportant deux articulations pivots,
- la figure 19 est une représentation schématique d'un système de mesure de pression à plusieurs cavités et plusieurs éléments sensibles.

### EXPOSÉ DÉTAILLÉ DE MODES DE RÉALISATION PARTICULIERS

Dans la description qui va suivre, les mêmes références seront utilisées pour désigner les éléments ayant sensiblement la même forme et la même fonction.

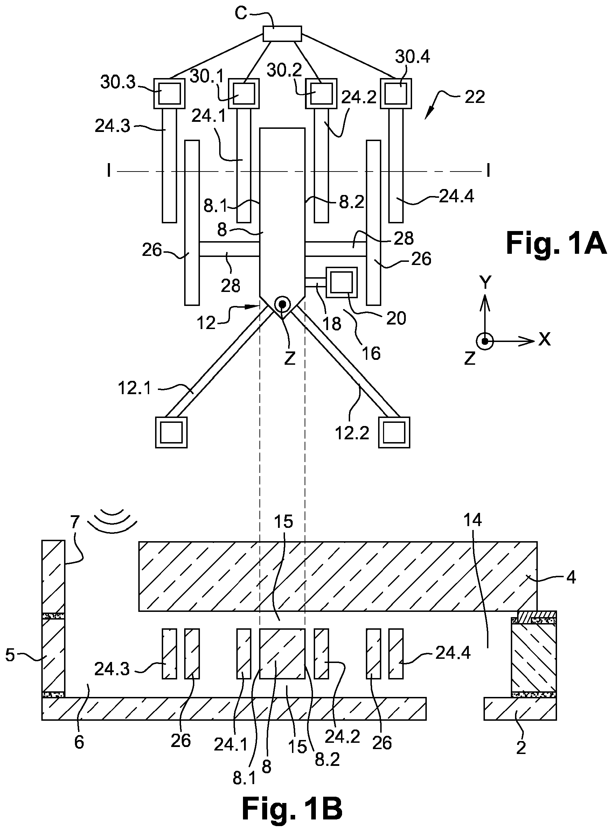

Sur les figures 1A et 1B, on peut voir un exemple d'un premier mode de réalisation d'un capteur de pression vu de dessus et vu en coupe.

Le capteur comporte un substrat support 2, désigné par la suite support et un substrat 4 formant un capot et désigné par la suite capot.

Le support 2 et le capot 4 sont sensiblement plans et s'étendent dans un plan XY qui est désigné par la suite plan du capteur et qui s'étend horizontalement dans la représentation de la figure 1B.

Le capteur comporte une première cavité déformable 6 qui est déformable dans une direction contenue dans un plan XY.

La première cavité 6 est délimitée entre le support 2, le capot 4, une paroi latérale fixe 5 et une paroi mobile ou déformable 8 dans une direction contenue dans un plan XY. La première cavité sensible 6 présente une ouverture 7 reliant l'intérieur de la cavité 6 à l'atmosphère dont on souhaite détecter la variation de pression, par exemple la variation de pression acoustique.

Le capteur comporte une partie fixe comprenant les substrats et une partie mobile ou structure mobile formée en partie par la paroi mobile ou l'élément sensible.

Dans l'exemple représenté, la paroi mobile 8 est formée par une poutre mobile en rotation autour d'un axe Z perpendiculaire au plan XY. La poutre mobile sera désignée par la suite "élément sensible".

Une articulation en rotation 12 d'axe Z est située au niveau d'une extrémité longitudinale de la poutre.

L'articulation 12 en rotation d'axe Z est réalisée dans l'exemple représenté par deux poutres 12.1, 12.2 d'axes sécantes, chacune solidaire par une extrémité longitudinale à la poutre sensible 8 et ancrée sur le support 2 et/ou le capot 4 par leur autre extrémité longitudinale. L'intersection des axes des poutres est l'intersection de l'axe de rotation Z avec le plan XY. Les poutres sont par exemple ancrées sur le support par des plots de connexion permettant de polariser l'élément sensible.

De manière préférée, l'articulation 12 présente une faible raideur dans le plan et une forte raideur hors plan pour éviter de toucher le substrat ou le capot. Sur la figure 2A', on peut voir une variante de réalisation du capteur de la figure 2A dans laquelle l'articulation 12' est formée par une poutre 12.1' ancrée sur le substrat et sensiblement alignée avec l'élément sensible. La poutre 12.1' est apte à se déformer en flexion et deux éléments élastiques 12.2' s'étendant dans le plan de part et d'autre de la paroi mobile et ancrées sur des plots d'ancrage sur le support 2 et/ou le capot 4 et

Sur la figure 2A", on peut voir une autre variante dans laquelle l'articulation 12" est formée par une poutre 12.1" sensiblement alignée avec l'élément sensible et apte à se déformer en flexion et deux poutres 12.2" s'étendant de part et d'autres de l'élément sensible et ancrées sur le substrat et aptes à se déformer en compression/traction.

Le capteur comporte également une deuxième cavité 14 disposée par rapport à la première cavité de l'autre côté de l'élément sensible 8, l'élément sensible comporte une face 8.1 du côté de la première cavité 6 et une face 8.2 du côté de la deuxième cavité 14. Il n'y a pas de court-circuit pneumatique entre la première et la deuxième cavité.

La deuxième cavité 14 débouche dans la face arrière du substrat support de sorte que la variation de pression régnant dans la deuxième cavité ne soit pas celle que l'on souhaite mesurer. En variante, la deuxième cavité 14, peut présenter un volume suffisant pour permettre à l'élément sensible de se déplacer sous l'effet d'une variation de pression sans amortissement excessif; ce volume est généralement désigné par "back volume". Le volume de la deuxième cavité fermée pourrait être par exemple au moins 5 fois le volume de la première cavité 6, par exemple 10 fois le volume de la première cavité 6.

Il sera noté que l'élément sensible n'obture pas de manière étanche la communication entre la première cavité 6 et la deuxième cavité 14. Des jeux 15 sont prévus entre l'élément sensible et le support et entre l'élément sensible et le capot. La dimension de ces jeux 15 dans la direction Z est choisie pour permettre un équilibrage des pressions entre la première et deuxième cavité lorsque la variation de pression présente une fréquence basse et pour rendre sensible l'élément sensible à des variations de pression présentant une fréquence supérieure à une fréquence donnée, ceci grâce aux effets visqueux entre le fluide, l'élément sensible et les substrats.

Le capteur comporte également des moyens de détection 16 du déplacement ou de la déformation de l'élément sensible.

Dans l'exemple représenté, les moyens de détection sont à jauge de contrainte et sont formés par une jauge en matériau piézorésistif 18 suspendue entre l'élément sensible 8 et un plot de contact 20 ancré sur le support. De préférence, l'axe de la jauge 18 est perpendiculaire à l'axe de l'élément sensible. Si la jauge se situe en aval de l'élément sensible, la jauge est comprimée lorsque l'élément sensible se déplace dans le sens horaire et étirée lorsque l'élément sensible se déplace dans le sens antihoraire. Les moyens de détection pourraient alternativement être de type capacitif, de tels moyens seront décrits plus en détail avec le deuxième mode de réalisation.

Le capteur de pression comporte également des moyens d'asservissement en position ou en déformation de l'élément sensible. Les moyens d'asservissement comportent des moyens d'actionnement qui sont avantageusement de type capacitif 22 permettant d'appliquer une force électrostatique à l'élément sensible et des moyens électroniques de commande de sorte à appliquer une force de rétroaction électrostatique par les moyens d'actionnement capacitifs, cette force de rétroaction étant déterminée en fonction du signal provenant des moyens de détection.

Les moyens d'actionnement comportent au moins deux paires d'électrodes. Dans l'exemple représenté, une première paire comporte une électrode solidaire 24.1 de la partie fixe et une électrode appartenant à la structure mobile et formée sur une partie au moins de la face 8.1 de l'élément sensible, et une deuxième paire comporte une électrode 24.2 solidaire de la partie fixe et une électrode appartenant à la structure mobile et formée par une face opposée sur une partie au moins de la face 8.2 de l'élément sensible.

Lorsque le matériau de l'élément sensible est un conducteur électrique, par exemple en silicium dopé, les électrodes mobiles peuvent être formées directement par les faces latérales de l'élément sensible. Dans le cas contraire, les électrodes mobiles sont formées par un dépôt conducteur sur les faces latérales de l'élément sensible.

Dans l'exemple représenté, les moyens d'actionnement comportent deux paires d'électrodes en plus, donc quatre paires d'électrodes d'actionnement au total. La structure mobile comporte des poutres additionnelles 26 disposées parallèlement à et à distance de l'élément sensible 8 et solidaires de celle-ci par des bras 28. Ces poutres additionnelles présentent des faces parallèles à la face sensible de la poutre. Les poutres additionnelles sont solidaires mécaniquement de la poutre mobile 8 de sorte à former un ensemble rigide avec l'élément sensible 8 et sont électriquement reliées à celles-ci. Les moyens d'actionnement comportent alors des électrodes 24.3, 24.4 solidaires du support en vis-à-vis des faces des poutres additionnelles. De préférence, les électrodes sont disposées symétriquement par rapport à l'élément sensible 8 pour exercer des forces électrostatiques de sens opposés.

En variante, les moyens d'actionnement pourraient ne comporter que les électrodes 24.1 et 24.2 ou les électrodes 24.3 et 24.4.

Afin de limiter l'inertie de l'élément sensible, il est préférable de réduire le nombre de poutres portant les électrodes d'asservissement. De manière préférée, dans le premier mode de réalisation les moyens d'asservissement comportent les électrodes 24.1 et 24.2 uniquement.

Les électrodes d'actionnement sont individuellement connectées électriquement aux moyens de commande C par un plot de contact 30.1, 30.2, 30.3, 30.41 respectivement.

Le fonctionnement du capteur de pression est le suivant. Le capteur de pression peut former un capteur de pression dynamique ou un microphone par exemple.

Dans l'exemple des figures 1A et 1B, la première cavité est délimitée en pratique par la paroi latérale 5 et la poutre 26. La pression s'exerce effectivement sur la poutre 26, ainsi que sur l'élément 8, qui a pour effet de déplacer l'élément sensible. De même, la deuxième cavité est délimitée en pratique par l'autre poutre 26 et l'autre paroi latérale.

Lorsqu'une variation de pression apparaît dans l'atmosphère en communication avec la première cavité 6, la deuxième cavité 14 étant initialement à l'équilibre de pression avec la pression de première cavité, la variation de pression s'applique à l'élément sensible 8. En supposant que la variation de pression soit positive, une force s'applique sur la poutre 26 direction de la deuxième cavité, provoquant un pivotement de la structure mobile et donc de paroi mobile dans le sens horaire et une compression de la jauge. Le changement de résistance associé est transformé en un signal électrique par un système électronique, comprenant par exemple un pont de Wheatstone.

Ce signal est envoyé aux moyens électroniques de commande de la rétroaction.

Les moyens électroniques de commande de la rétroaction génèrent alors un signal de commande des électrodes d'actionnement sous la forme d'un signal de polarisation afin d'asservir en position l'élément sensible afin d'annuler la pression acoustique incidente via une pression électrostatique, commandée en tension. La commande dépend du signal mesuré par les moyens de détection, auquel est éventuellement appliquée une correction. Le signal physique d'intérêt, i.e. le signal de sortie du microphone, est proportionnel à l'amplitude de la pression de contre-réaction appliquée par les électrodes d'actionnement.

Le système peut être schématisé par un schéma-bloc simplifié représenté sur la figure 16 sur lequel l'élément sensible est désigné S, les moyens de détection sont désignés D, les moyens de commande C1 des moyens d'asservissement, les moyens d'asservissement sont désignés A1. Sur le schéma-bloc sont représentés des moyens de trimming C2 et des moyens d'actionnement A2 commandés par les moyens de trimming C2 qui seront décrits ci-dessous.

Les moyens de détection D détecte le déplacement de l'élément sensible; ce signal est utilisé pour déterminer la pression dans la première cavité et par les moyens de commande des moyens d'asservissement, ces moyens de commande C1 génèrent un ordre aux moyens d'asservissement A1.

Pour un capteur non asservi, la bande passante est déterminée uniquement par la fonction de transfert mécanique. Dans le cas de la présente invention, la fréquence de résonance de la structure mobile n'est pas l'unique paramètre fixant la bande passante. Grâce à l'asservissement en position, la bande passante dépend également de l'électronique d'asservissement. Les problématiques de bande passante et de résolution sont donc découplées dans le capteur selon l'invention et la bande passante et la résolution peuvent être optimisées séparément.

De plus, la dynamique de pression susceptible d'être mesurée peut être choisie indépendamment des paramètres mécaniques, via l'électronique d'asservissement également. En effet, l'amplitude du signal au niveau des moyens de transduction (piézorésistifs ou capacitifs) est plus faible que celle du système équivalent dépourvu de système d'asservissement. Dans ce cas, la dynamique est limitée par le dimensionnement et la commande des électrodes d'actionnement.

Grâce à l'invention, on dispose donc de degrés de liberté supplémentaires pour optimiser les performances du capteur de pression, en termes de bande passante, de dynamique et de résolution. En particulier, le dimensionnement de l'élément sensible peut être optimisé sans être limité par le moyen de transduction. La raideur et l'inertie de la structure mobile peuvent être choisies de manière à obtenir la meilleure résolution possible, indépendamment de la bande passante.

Sur la figure 18, on peut voir une autre variante de réalisation du capteur selon l'invention dans lequel la structure mobile au lieu d'être articulée par une extrémité sur le substrat est articulée sur le substrat à ses deux extrémités par des liaisons pivots 13 d'axe perpendiculaire au plan du substrat. La structure est à même de se déformer sous l'action d'un champ de pression extérieur. Cette variante présente avantageusement une meilleure tenue mécanique aux chocs extérieurs. Plusieurs jauges piézorésistives peuvent être mises en œuvre, deux jauges sont mises en œuvre sur la figure 18. En outre les moyens d'asservissement de type capacitif comportent deux électrodes de part et d'autre de la paroi mobile dont les faces forment des électrodes.

Sur les figures 2A et 2B, on peut voir un autre exemple de réalisation du premier mode de réalisation dans lequel le capteur de pression met également en œuvre des moyens de trimming.

Les moyens de trimming sont du type capacitif et mettent en œuvre au moins une paire d'électrodes. Dans l'exemple représenté, deux des paires d'électrodes d'actionnement sont utilisées pour effectuer du trimming, par exemple les paires comprenant les électrodes 24.3 et 24.4. Il sera compris qu'un capteur avec au moins une paire d'électrodes dédiée au trimming en plus des quatre électrodes dédiées à l'actionnement ne sort pas du cadre de la présente invention.

Dans le cas du trimming, les électrodes sont polarisées de sorte que l'élément sensible soit soumis à une force dépendant de sa position, et une force nulle lorsque l'élément sensible est dans sa position d'équilibre.

Le trimming peut être assimilé comme la génération d'une raideur négative; il peut donc être mis en œuvre pour modifier la raideur d'ensemble de la structure mobile d'un capteur. Grâce à l'action des électrodes de trimming, on peut diminuer la raideur totale du dispositif, ce qui permet de gagner en sensibilité.

La mise en œuvre de moyens de trimming avec les moyens d'asservissement est particulièrement avantageuse car elle ne grève pas la bande passante.

En réalisant un capteur de raideur réduite grâce aux moyens de trimming, celui-ci présente une grande bande passante sans perdre de sensibilité aux basses fréquences, i.e. aux fréquences inférieures à la fréquence de résonance.

La mise en œuvre de moyens de trimming présente également un avantage lorsque les moyens de détection sont de type piézorésistif. La forme de la ou des jauges prend en compte à la fois la transmission des contraintes dans les jauges et la contribution des jauges à la raideur d'ensemble. Grâce aux moyens de trimming qui permettant l'ajout d'une raideur négative, il est possible de compenser la raideur de la ou des jauges. Il est alors possible d'optimiser la structure des jauges pour transmettre les contraintes dans les jauges sans tenir compte de l'impacte sur la raideur d'ensemble. Le gain sur toute la bande passante peut alors être augmenté.

D'une part, le trimming permet de choisir la raideur optimale du microsystème ; d'autre part, dans le cas d'un capteur de pression mettant en œuvre au moins une jauge piézorésistive, il permet d'optimiser la transmission des contraintes dans les jauges.

Dans l'exemple décrit et de préférence, les électrodes d'actionnement et les électrodes de trimming sont distinctes. Il peut être prévu en variante d'utiliser les mêmes électrodes pour faire l'asservissement et le trimming. Pour cela on polarise les électrodes avec une tension comprenant un signal continu et un signal alternatif, le signal continu servant pour le trimming et le signal alternatif pour l'asservissement. De préférence, l'amplitude du signal alternatif est très inférieure à celle du signal continu.

Sur les figures 3A et 3B, on peut voir un autre exemple de réalisation du capteur selon le premier mode de réalisation présentant une structure mobile plus légère.

La structure mobile comporte l'élément sensible 8, les poutres additionnelles 24 reliées à l'élément sensible 8 par des bras et un élément de liaison 32 s'étendant entre les deux poutres additionnelles et sous les bras.

Cet élément de liaison présente une épaisseur relativement plus faible que celle de l'élément sensible, par exemple 20 fois plus faible, voire 100 fois plus faible. Elle a par exemple une épaisseur de 250 nm pour un élément sensible d'épaisseur 20 µm. Sa mise en œuvre permet d'augmenter la rigidité de la structure mobile sans trop augmenter son inertie, de sorte que sa déformation sous l'effet de la pression incidente reste négligeable.

Sur les figures 4A et 4B est représenté un exemple de réalisation d'un deuxième mode de réalisation d'un capteur de pression.

Ce mode de réalisation diffère du premier mode de réalisation en ce que l'élément sensible 108 comporte un logement 34 pour loger les électrodes d'actionnement.

Pour cela, dans l'exemple représenté l'élément sensible 108 comporte un fond inférieur 108.1, deux parois latérales 108.2, 108.3 et une paroi d'extrémité 108.4 reliée aux poutres définissant l'axe de rotation 7. Une première paroi latérale 108.2 est disposée du côté de la première cavité, elle présente une face extérieure 108.21 du côté de la première cavité et une face intérieure 108.22 portant une électrode en regard de l'électrode 24.1, la face extérieure 108.21 voit donc la variation de pression de l'atmosphère relié à la première cavité. La deuxième cloison présente une face extérieure 108.31 du côté de la deuxième cavité et une face intérieure 108.32 portant une électrode en regard de l'électrode 24.2. Les électrodes 24.1 et 24.2 sont reçues côte à côte dans le logement 34.

Lorsque le matériau de l'élément sensible 108 est un conducteur électrique, par exemple du silicium dopé, les électrodes mobiles peuvent être formées par les parois même de l'élément sensible. Dans le cas contraire, les électrodes mobiles sont formées par un dépôt conducteur sur les faces internes 108.22 et 108.32 de ces parois latérales 108.2, 108.3.

De manière avantageuse le fond inférieur peut être ajouré, permettant un allègement de la structure mobile tout en assurant une rigidité suffisante.

De préférence, les cloisons latérales 108.2, 108.3 et la cloison d'extrémité 108.4 sont d'un seul tenant avec les poutres de suspension.

Les électrodes d'actionnement 24.1, 24.2 sont ancrées sur le substrat par une extrémité longitudinale par un plot de connexion, l'autre extrémité longitudinale qui est libre faisant face à la cloison d'extrémité 108.4. Une capacité parasite peut apparaître entre l'extrémité de l'électrode et la cloison d'extrémité 108.4, mais celle-ci peut être réduite en augmentant l'espace entre l'électrode et la cloison d'extrémité 108.4.

Les électrodes d'actionnement n'étant pas dans les cavités, elles n'induisent alors pas de perte de charge en amont et en aval de a structure mobile, l'amont et l'aval étant à considérer de la première cavité vers la deuxième cavité.

L'actionnement électrostatique pour asservir l'élément sensible en position met en œuvre des surfaces différentes de celle utilisée pour capter les variations de pression. Ce mode de réalisation est particulièrement avantageux puisqu'il permet de réaliser un capteur de pression ayant une sensibilité accrue par rapport à celle du capteur du premier mode de réalisation. En effet, la sensibilité du capteur dépend de la surface de la structure mobile exposée à la pression incidente. Par ailleurs, les efforts exercés sur la structure mobile par les électrodes d'actionnement sont également proportionnels à la surface en regard. Par conséquent une certaine surface en regard est requise pour l'actionnement

En outre, cette configuration permet d'avoir une surface voyant la pression sensiblement égale à celle servant à l'actionnement. Cette configuration permet d'éviter d'augmenter les surfaces de l'élément sensible afin de compenser la présence des électrodes d'actionnement. Cette augmentation de surface conduirait à une augmentation de l'inertie de la structure mobile, ce qui serait également préjudiciable à la sensibilité du capteur.

Dans l'exemple représenté, le capteur comporte des moyens de détection à jauge de contrainte, de type piézorésistif.

A titre d'exemple, la structure mobile a par exemple une hauteur comprise entre 5 µm et 50 µm, une longueur comprise entre 100 µm et 1 mm, une épaisseur totale considérée dans la direction de déplacement de la structure mobile comprise ente 5 µm et 30. Le fond de la structure mobile a par exemple une épaisseur comprise entre 100 nm et 1 µm.

Les électrodes ont par exemple une épaisseur comprise entre 1 µm et 5 µm et la distance entre les électrodes est par exemple comprise entre 5 µm et 10 µm.

Ce mode de réalisation présente également l'avantage par rapport au premier mode de réalisation d'offrir un encombrement dans le plan réduit.

Dans cet exemple de réalisation, on peut utiliser les électrodes d'actionnement pour réaliser le trimming. Pour cela, on applique aux électrodes un signal de polarisation comprenant un signal continu et un signal alternatif comme cela a été décrit ci-dessus.

En variante, les électrodes d'actionnement pourraient être fixées au capot dans une zone en regard du logement et non être suspendues par une extrémité longitudinale.

En variante encore, l'élément sensible pourrait comporter un logement qui soit non pas ouvert vers le capot mais ouvert vers le support, il comporterait alors un fond supérieur au lieu d'un fond inférieur. Les électrodes pourraient alors être suspendues par une extrémité comme dans l'exemple représenté sur les figures 4A et 4B ou fixées sur le support dans une zone en regard du logement.

En variante encore, on pourrait envisager comme cela est représenté sur la figure 4' de réaliser un élément sensible ayant une section transversale en forme de H, un logement 34' étant délimité sous le logement 34 et séparé de celui-ci par le fond 108.1. Les électrodes de trimming 24.3, 24.4 sont logées dans le logement 34' et se superposent aux électrodes d'actionnement 24.1, 24.2. Inversement les électrodes d'actionnement 24.1, 24.2 pourraient se situer dans le logement 34' et les électrodes de trimming dans le logement 34.

Les exemples d'articulation des figures 2A' et 2A" s'appliquent au deuxième mode de réalisation.

Sur les figures 5A et 5B, on peut voir une autre variante de réalisation dans laquelle les moyens de détection de type piézorésistif comporte une jauge amincie, appelée nanojauge 18'. La nanojauge a par exemple une largeur typique comprise entre 250 nm et 2 µm ; et une longueur comprise entre 1 µm et 10 µm. l'épaisseur de la nanojauge est par exemple égale à celle de l'élément sensible, par exemple comprise entre 5 µm à 50 µm. La nanojauge peut en variante être amincie et avoir une épaisseur comprise entre 100 nm et 1 µm.

La mise en œuvre d'une ou plusieurs nanojauges permet de concentrer les contraintes dans la jauge, qui sont inversement proportionnelle à la surface de la section de la jauge.

Sur la figure 6, on peut voir une variante de réalisation du capteur des figures 4A et 4B dans laquelle les moyens de détection sont de type capacitif. Ils comportent une électrode 36 disposée de préférence dans la deuxième cavité en regard de la face 108.31 de la deuxième cloison de l'élément sensible 108. L'électrode 36 est fixe par rapport au support et est reliée à un plot de connexion, elle forme avec la face 108.31 de la deuxième cloison 108.3 un condensateur à capacité variable à variation d'entrefer dont la capacité varie suivant le mouvement de rotation de l'élément sensible. En disposant l'électrode 36 dans la deuxième cavité, on évite de réduire la surface voyant la variation de pression. Néanmoins il peut être prévu de former un condensateur à capacité variable avec la face 108.21 soit en remplacement du condensateur à capacité variable dans la deuxième cavité, soit en plus pour réaliser une mesure différentielle. En variante, le condensateur à capacité variable pourrait être à variation de surface.

Sur la figure 7, on peut voir un capteur dans lequel les moyens de détection mettent en œuvre deux jauges piézorésistives 18, pour l'une fixée d'un côté de l'élément sensible et pour l'autre fixée de l'autre côté de l'élément sensible par rapport à l'axe de l'élément sensible. Lors du déplacement en rotation, l'une des jauges est comprimée et l'autre est étirée, les jauges peuvent être montées en pont de Wheatstone permettant une mesure différentielle.

Dans l'exemple représenté, les jauges 18 sont fixées à l'élément sensible au niveau de la paroi d'extrémité 108.4. Par exemple, la distance le long de l'axe de l'élément sensible entre l'axe de rotation et le point d'attache des jauges à l'élément sensible est de quelque micromètres, alors que l'élément sensible a par exemple une longueur de 100 µm. Mais on pourrait prévoir de fixer les jauges plus loin de l'axe de rotation au niveau des cloisons latérales 108.2 et 108.3. La raideur due aux jauges peut être compensée au moins en partie par les moyens de trimming.

Il peut même être prévu de mettre en œuvre plus de deux jauges, par exemple quatre ou plus, les jauges étant réparties de part et d'autre de l'élément sensible la mise en œuvre de plusieurs nanojauges permet d'augmenter le signal dans certains cas, par exemple si les jauges sont insérées dans un même pont de Wheatstone. En outre, en augmentant le nombre de jauges, on diminue la contrainte dans chacune des jauges, et donc on augmente la pleine échelle.

La raideur due aux jauges peut être compensée au moins en partie par les moyens de trimming.

Sur la figure 8, on peut voir une autre variante de réalisation du capteur des figures 4A et 4B, dans laquelle la jauge piézorésistive s'étend parallèlement à l'axe de l'élément sensible et non perpendiculairement. Pour cela, l'élément sensible comporte un bras latéral 38 s'étendant dans la deuxième cavité, la jauge étant suspendue entre le bras 38 et le plot de connexion, le bras transmettant le déplacement à la jauge. Cette configuration peut être avantageuse dans certaines implantations.

Sur la figure 9, on peut voir encore une autre variante de réalisation dans laquelle la deuxième cavité est ouverte non pas dans le substrat support à l'opposé de l'ouverture de la première cavité, mais comporte une ouverture latérale 40, i.e. dans le substrat intermédiaire entre le support et le capot. Il est à noter que dans cette variante, la première cavité est disposée à droite de l'élément sensible dans la représentation de la figure 9 alors que dans les exemples et variantes décrites précédemment dans la description, elle était située à gauche de l'élément sensible. La jauge piézorésistive est alors située dans la première cavité. Le fonctionnement du capteur est inchangé.

Cette ouverture latérale de la deuxième cavité peut être avantageuse pour certaines implantations. Elle peut permettre de diminuer l'épaisseur totale du MEMS et de faciliter son intégration dans des dispositifs contraints en taille. De plus, le chemin acoustique entre la cavité aval et le back-volume est le lieu de frottement visqueux et donc la source d'un bruit associé à ces pertes. L'ouverture latérale peut permettre de diminuer ce bruit.

Sur les figures 10A et 10B, on peut voir un autre exemple de réalisation dans lequel les électrodes 24.1, 24.2 sont reliées électriquement à une source de polarisation par des plots de connexion 42 situés sensiblement dans une zone intermédiaire entre les extrémités longitudinales, de préférence dans une zone médiane, des électrodes et fixés au capot.

Dans la variante où l'élément sensible comporte un logement 34' ouvert vers le substrat support, on peut envisager que les électrodes soient reliées électriquement à une source de polarisation par des plots de connexion situés sensiblement dans une zone intermédiaire entre les extrémités longitudinales, préférence dans une zone médiane, des électrodes et fixés au substrat support.

Sur les figures 11A à 11C, on peut voir un autre exemple de réalisation particulièrement avantageux d'un capteur selon le deuxième mode de réalisation. Dans cet exemple, le fond inférieur 108.1 comporte un ou plusieurs passages traversants 44 et les électrodes 24.1, 24.2 sont solidarisées au substrat support par un ou plusieurs piliers 46.

De préférence, les piliers 46 sont isolés électriquement du substrat support par un isolant électrique, tel que du SiO₂, afin de ne pas mettre en court-circuit les électrodes. Les électrodes sont, dans l'exemple représenté, connectées par une extrémité longitudinale à un plot de connexion. Un pilier par électrode peut être prévu, de préférence un grand nombre de piliers répartis le long de la direction longitudinale des électrodes sont mis en œuvre. Par exemple, la largeur des piliers est comprise exemple entre 1 µm et 25 µm. On peut prévoir un passage traversant par pilier ou alors que plusieurs piliers passent à travers un seul passage traversant.

En variante, le pilier ou l'un des piliers ou plusieurs piliers pourraient être remplacé par un plot de contact comme ceux mis en œuvre dans l'exemple des figures 10A et 10B.

Les piliers permettent de maintenir la rigidité des électrodes d'actionnement/trimming, afin qu'elles ne se déplacent pas sous l'effet des forces électrostatiques entre l'élément sensible et les électrodes elles-mêmes.

Sur les figures 12A et 12B, on peut voir un autre exemple de réalisation d'un capteur selon le deuxième mode de réalisation. Celui-ci diffère des exemples décrits ci-dessous par le fait que les électrodes présentent une structuration qui facilite l'écoulement de l'air, et plus généralement du fluide gazeux situé entre les cloisons 108.2 et 108.3 et les électrodes 124.1, 124.2, ce qui réduit l'amortissement visqueux, dénommé « squeezed-film damping », ainsi que le bruit acoustique inhérent à cet amortissement; la dégradation de la résolution du microphone est de fait réduite. Dans l'exemple représenté, les électrodes présentent vue de face une structuration crénelée, les créneaux situés au dessus de l'axe de l'électrode étant décalés axialement par rapport aux créneaux situés au dessous de l'axe. Il sera compris que toute autre forme de structuration est envisageable en tenant compte cependant à ne par réduire trop les surfaces d'actionnement des électrodes.

En outre, contrairement aux capteurs de pression hors plan pour lesquels l'amortissement visqueux apparaît au niveau de moyens de détection et pour lesquels la structuration de l'électrode de détection a pour effet de diminuer la sensibilité du microphone, la structuration des électrodes d'actionnement n'a pas d'influence sur la sensibilité du capteur selon l'invention.

Les électrodes d'actionnement fixes du premier mode de réalisation pourraient également être structurées pour réduire cet amortissement.

Sur la figure 13, on peut voir un autre exemple de réalisation d'un capteur selon le deuxième mode de réalisation. Ce capteur comporte des moyens de butée 48 destinés à limiter le déplacement en rotation de la structure mobile et à la protéger d'un trop grand différentiel de pression.

Dans l'exemple représenté, les moyens de butée sont solidaires du substrat support et sont disposés de part et d'autre de l'élément sensible par rapport à son axe au niveau de son extrémité longitudinale libre. Les moyens de butée sont disposés symétriquement par rapport à l'élément sensible. Les moyens de butée pourraient être disposés à d'autres emplacements le long de l'élément sensible. La distance entre les moyens de butée et les faces extérieures de cloisons 108.2, 108.3 détermine le débattement autorisé pour l'élément sensible.

En variante, les moyens de butée pourraient être fixés au capot.

Sur les figures 14A à 14C, on peut voir un autre exemple de réalisation particulièrement avantageux du deuxième mode de réalisation.

Le capteur comporte deux premières cavités déformables 206.1 et 206.2 reliées à l'atmosphère dont on souhaite mesurer les variations de pression et isolées l'une de l'autre. Il comporte deux deuxièmes cavités 214.1, 214.2 isolées l'une de l'autre.

Le capteur comporte également un élément sensible sous forme de poutre qui est monté articulé en rotation sur le substrat support. L'élément sensible 208 forme la cloison déformable à la fois de la cavité 206.1 et de la cavité 206.2.

Pour cela, l'axe d'articulation Z se trouve non pas à une extrémité de l'élément sensible mais dans une zone intermédiaire entre les deux extrémités longitudinales de l'élément sensible, ainsi l'élément sensible est divisé en deux portions longitudinales, l'une d'un côté de l'axe de rotation Z sensible à la pression dans la cavité 206.1 et l'autre de l'autre côté de l'axe de rotation Z sensible à la pression dans la cavité 206.2.

De manière préférée, l'axe de rotation Z passe par le centre de gravité de l'élément sensible 208, ainsi les deux portions longitudinales 208.1, 208.2 sont de même longueur et offre une surface sensible à la pression identique.

Dans cet exemple l'articulation comporte deux poutres d'axes sécants raccordées à une face longitudinale de l'élément sensible 208.s

Comme on peut le voir sur les vues en coupe des figures 14B et 14C, la cavité déformable 206.1 et la cavité déformable 206.2 sont disposées de sorte que la surface sensible de la cavité déformable 206.1 et celle de la cavité 206.2 soient situées sur des faces opposées de l'élément sensible afin que la pression agissant dans les deux cavités déformables sur l'élément sensible le mette en rotation.

La cavité déformable 206.1 est séparée de la cavité 214.2 par une cloison 50 s'étendant entre le support et le capot, et la cavité déformable 206.2 est séparée de la cavité 214.4 par une cloison 52 s'étendant entre le support et le capot. Les cloisons 50 et 52 visent à isoler acoustiquement les cavités 214.2 et 214.4. Les cloisons 50 et 52 ne sont pas en contact avec l'élément sensible pour ne pas gêner son déplacement et le jeu entre le bord des cloisons 50, 52 et l'élément sensible est suffisamment faible pour ne pas gêner les mesures.

L'élément sensible 208 présente une section transversale en U ouvert vers le capot. Néanmoins elle comporte deux logements 234.1, 234.2 séparés l'une de l'autre par une cloison transversale 255 au niveau de laquelle se trouve l'axe de rotation Z. les deux logements 234.1, 234.2 sont ouverts à une extrémité longitudinale de l'élément sensible. La cloison 255 permet d'assurer la rigidité de l'élément sensible.

Les moyens d'asservissement comportent quatre paires d'électrodes, deux électrodes fixes 224.1, 224.2 étant disposées dans le logement 234.1 et deux électrodes fixes 224.1', 224.2' étant disposées dans le logement 234.2. Dans cet exemple les électrodes sont ancrées sur le support par des plots de connexion assurant leur polarisation.

Le capteur comporte des moyens de détection 216 qui sont de type piézorésistif dans l'exemple représenté. Ils comportent deux jauges piézorésistives 218.1, 218.2 disposées de part et d'autre de la cloison 50 et détectant chacune le déplacement de l'élément sensible 208, l'une étant sollicitée en traction et l'autre étant sollicitée en compression. Les jauges peuvent être montées en pont de Wheatstone permettant une mesure différentielle. En variante, les moyens de détection peuvent être de type capacitif.

Ce montage présente l'avantage d'offrir un capteur peu sensible aux accélérations. En effet, en cas d'accélération par exemple perpendiculaire à l'axe de l'élément sensible, celui-ci serait déplacé dans le plan du capteur perpendiculairement à son axe de rotation provoquant soit une compression des deux jauges soit une extension des deux jauges. Du fait du montage en pont de Wheastone, le signal émis dans ce cas serait nul.

Le fonctionnement du capteur des figures 14A à 14C va maintenant être décrit.

Les deux premières cavités 206.1, 206.2 sont reliées à l'atmosphère dont on souhaite mesurer la variation de pression. On considère une augmentation de pression. Lorsque la pression augmente, une différence de pression apparaît entre la première cavité 206.1 et la deuxième cavité 214.1 et entre la première cavité 206.2 et la deuxième cavité 214.2. Un effort s'applique alors sur les faces des portions 208.1, 208.2 de l'élément sensible 208 situées dans les cavités déformables 206.1, 206.2. Du fait de leur disposition relative, l'effort s'exerçant sur la portion 208.1 et celui s'exerçant sur la portion 208.2 s'ajoute provoquant, dans l'exemple représenté, une rotation dans le sens antihoraire de l'élément sensible 208. Cette rotation exerce un effort de traction sur la jauge 218.1 et un effort de compression sur la jauge 218.2, provoquant l'émission d'un signal électrique. Les moyens de commande polarisent les moyens d'actionnement afin d'asservir l'élément sensible en position.

Sur la figure 15, on peut voir une variante du capteur des figures 14A à 14C dans laquelle le capteur comporte également des moyens de trimming. Par exemple, les électrodes 224.2, 224.2' servent non pas à l'asservissement mais au trimming.

Il sera compris que les exemples de réalisation des différents modes de réalisation peuvent être combinés sans sortir du cadre de la présente invention. Dans un exemple particulièrement avantageux, le capteur présente la structure de celle des figures 14A à 14C ou 15, des électrodes solidaires du substrat à travers le fond inférieur ajouré de l'élément sensible, les électrodes d'actionnement et/ou de trimming étant structurées pour réduire le phénomène de squeezed film damping.

Un capteur de pression selon le deuxième mode de réalisation dans lequel l'une des électrodes d'actionnement est à l'intérieur de l'élément sensible et l'autre est à l'extérieur de l'élément sensible ne sort pas du cadre de la présente invention.

En outre, un capteur de pression selon le deuxième mode de réalisation comportant une seule électrode de trimming disposée à l'intérieure de l'élément sensible générant des efforts électrostatiques sur les deux côtés de l'électrode, peut être suffisante pour générer la raideur négative requise.

Sur la figure 19, on peut voir, représenté de manière schématique, un exemple de système de mesure de pression comportant plusieurs éléments sensibles 8 associés à des cavités distinctes 6, 14. Par exemple deux éléments mobiles distincts 8 peuvent partager une cavité. On peut, par exemple, considérer quatre poutres mobiles avec au total deux premières cavités 6 et trois secondes cavités 14.

La présente invention permet d'optimiser de manière séparée la bande passante du système d'une part, la raideur et l'inertie de la structure d'autre part.

Elle permet également de rendre la forme ou design de la structure indépendant de la dynamique et du gain du microsystème

Dans le cas d'un dispositif à détection piézorésistive, l'invention permet de choisir la raideur de la structure mobile indépendamment de la transmission des efforts dans la jauge de contrainte, et donc de pouvoir mettre en œuvre plusieurs jauges et de choisir leur emplacement.

Puisque la structure mobile reste proche de son point d'équilibre grâce aux moyens d'asservissement, le système présente moins de non-linéarités. En outre, si le signal d'entrée comporte une composante à la fréquence de résonance, le risque que la structure mobile vienne en contact avec la partie fixe est évité du fait de moyens d'asservissement qui suppriment la résonance mécanique.

Un exemple de procédé de réalisation d'un capteur selon le deuxième mode de réalisation comportant une électrode d'asservissement à l'intérieur de l'élément sensible et une électrode d'asservissement à l'extérieur de l'élément sensible 4B va maintenant être décrit à l'aide des figures 17A à 17I.

D'une part on réalise un premier sous-ensemble sur le substrat support.

Sur un premier substrat 302, dit support, qui pourra être en matériau semi-conducteur, en Silicium par exemple, on réalise un dépôt d'une couche sacrificielle 304. Cette couche diélectrique pourra être avantageusement en oxyde de silicium déposée par dépôt chimique en phase vapeur assisté par plasma (PECVD pour Plasma-enhanced chemical vapor deposition en terminologie anglo-saxonne), dépôt chimique en phase vapeur à faible pression (LPCVD pour Low-Pressure Chemical Vapor Déposition: en terminologie anglo-saxonne).ou par oxydation thermique. Son épaisseur pourra être comprise entre quelques centaines de nanomètres et quelques microns, 5 µm par exemple. On dépose ensuite une couche de matériau conducteur 306 préférentiellement à base de Si ou SiGe et d'épaisseur comprise entre 200 nm et 5 µm. On peut également partir d'un substrat de type SOI (figure 17A).

Lors d'une étape suivante, on réalise une lithographie et une gravure de la couche 306 pour définir la jauge 18 et le fond intérieur 108.1. Ensuite on forme une deuxième couche sacrificielle 308 sur la couche 306, d'épaisseur comprise entre quelques centaines de nanomètres et quelques microns, puis on réalise une lithographie et une gravure de la couche sacrificielle 308 pour définir une protection de la jauge 18 et du fond inférieur 108.1 de l'élément sensible. Dans cette représentation, la jauge 18 n'est pas représentée suivant sa longueur mais en coupe transversale afin de montrer la couche sacrificielle. L'élément ainsi réalisé est représenté sur la figure 17B.

Lors d'une étape suivante, on forme une couche 309 de silicium par exemple par dépôt LPCVD ou PECVD sur la couche 306 et sur la couche sacrificielle 308, sur une épaisseur typiquement de 5 à 50 µm, puis on effectue une gravure de celle-ci, par exemple par RIE ou DRIE (Deep reactive ion etching en terminologie anglo-saxonne), de sorte à former les parois non déformables des cavités, le fond inférieur de l'élément sensible, les parois latérales de l'élément sensible et les électrodes.

Le sous-ensemble A ainsi réalisé est représenté sur la figure 17C.

D'autre part, on réalise un deuxième sous-ensemble sur le substrat capot portant les contacts et connexions électriques.

Sur un substrat 310 par exemple en silicium (figure 17D), on forme ensuite une couche 312 de matériau diélectrique ayant une épaisseur typiquement de quelques dizaines de nanomètres à quelques µm. Cette couche diélectrique 312 peut être par exemple un oxyde de silicium, déposé par PECVD LPCVD ou par oxydation thermique. On définit par une lithographie et une gravure de la couche 312 le via 312' dans. On forme ensuite une couche conductrice, par exemple du AISi, d'épaisseur variant de quelques centaines de nanomètres à quelques µm, réalisée par dépôt par pulvérisation cathodique par exemple (PVD) ou par évaporation. On réalise ensuite une lithographie et une gravure de la couche conductrice, par exemple par RIE, de sorte à former un contact 314, et une portion conductrice 316 distincte du contact 314. Cet ensemble d'étapes technologiques peut être répété afin de réaliser un ou plusieurs niveaux d'interconnexions.

L'élément ainsi réalisé est représenté sur la figure 17E.

On pourra avantageusement choisir pour la dernière couche conductrice un matériau de conduction permettant de réaliser en parallèle un scellement de ce substrat capot avec le substrat support. Ce matériau dépendra alors de la technique de scellement choisie, scellement eutectique, thermocompression par exemple. A titre d'exemple nous avons pris le cas d'un scellement réalisé par formation d'alliage eutectique AuSi.

Sur la figure 17F nous avons représenté des cordons de scellement en Au 320 réalisés avec les étapes de technologique déjà présentées précédemment.

On assemble ensuite les deux sous-ensembles A et B de sorte que les contacts du sous-ensemble B soient en contact avec les parois des cavités du sous-ensemble A. Dans l'exemple choisi l'assemblage se fait par scellement eutectique entre les cordons de scellement en Au présentes sur le substrat capot et le Si du substrat support.

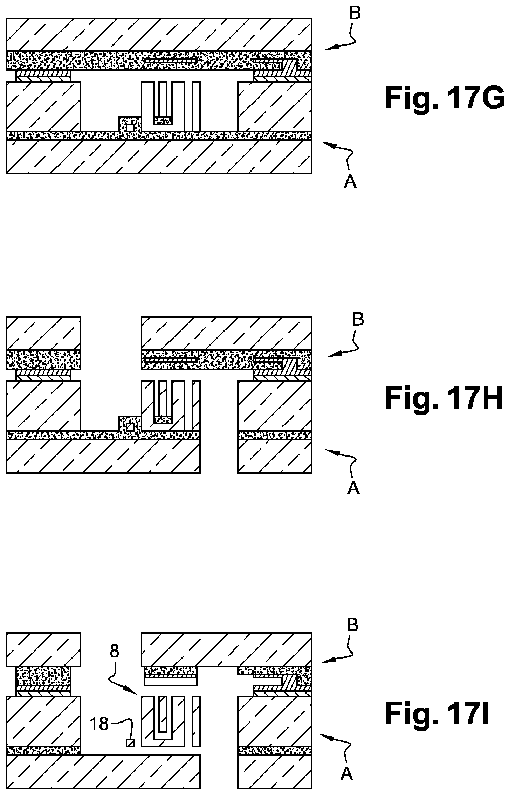

L'élément ainsi réalisé est représenté sur la figure 17G. Lors d'une étape suivante on réalise les ouvertures des cavités, par exemple par gravure du capot et du support, par exemple par DRIE.

L'élément ainsi réalisé est représenté sur la figure 17H.

Lors d'une étape suivante, l'élément sensible 8, la jauge 18 et les électrodes sont libérées par gravure des couches sacrificielles, par exemple par du fluorure d'hydrogène sous forme vapeur.

L'élément ainsi réalisé est représenté sur la figure 17I.

L'invention s'applique à la réalisation de composants de type microphone par mesure des gradients de pression acoustique, ou capteur de pression dynamique, notamment pour des applications grand public (téléphonie mobile, jeux, lecteur MP3, téléviseur...). L'invention peut également s'appliquer à la réalisation de composants à haute performance pour les dispositifs biomédicaux, comme par exemple les implants cochléaires.

## Revendications

1. Capteur de pression de type MEMS et/ou NEMS comportant dans un substrat s'étendant dans un plan, dit plan du capteur:
- une partie fixe et une partie mobile par rapport à la partie fixe, la partie mobile comprenant au moins un élément sensible (S, 8, 108, 208) apte à se déplacer ou à se déformer dans le plan du capteur sous l'effet d'une variation de pression,
- des moyens de détection (D, 16, 216) du déplacement ou de la déformation de l'élément sensible dans le plan du capteur dû à la variation de pression, **caractérisé en ce que** le capteur comporte également :
- des premiers moyens d'actionnement (A1, 24.1, 24.2, 24.3, 24.4, 124, 124.1, 124.2, 224.1, 224.2, 224.1', 224.2') de la partie mobile, lesdits premiers moyens d'actionnement étant commandés de sorte à asservir en position le déplacement ou la déformation de l'élément sensible (8, 108, 208),
des premiers moyens de commande (C1) des premiers moyens d'actionnement qui sont configurés à partir de signaux émis par les moyens de détection, pour polariser les premiers moyens d'actionnement de sorte à asservir en position le déplacement ou la déformation de l'élément sensible
dans lequel les premiers moyens d'actionnement (24.1, 24.2, 24.3, 24.4, 124, 124.1, 124.2, 224.1, 224.2, 224.1'n 224.2') comportent au moins deux paires d'électrodes, chaque paire comprenant une électrode fixe portée par la partie fixe et une électrode mobile en regard, portée par la partie mobile, et
dans lequel l'élément sensible (108, 208) comporte une face soumise à la variations de pression, dite face sensible, et comporte au moins un logement (34, 234.1, 234.2) délimité entre deux parois parallèles (108.2, 108.3) de l'élément sensible, l'une des parois parallèles (108.2, 108.3) portant la face sensible, tout ou partie des électrodes fixes des premiers moyens d'actionnement étant disposées dans ledit logement (34, 134) et tout ou partie des électrodes mobiles des premiers moyens d'actionnement étant situées sur les faces internes (108.22, 108.32) des parois (18.2, 18.3) du logement.

2. Capteur de pression selon la revendication 1, dans lequel les premiers moyens d'actionnement (24.1, 24.2, 24.3, 24.4, 124, 124.1, 124.2, 224.1, 224.2, 224.1', 224.2') sont de type capacitif, lesdits moyens d'actionnement étant portés en partie par la partie fixe et en partie par la partie mobile.

3. Capteur de pression selon la revendication 1 ou 2, comportant des deuxièmes moyens d'actionnement de type capacitif de la partie mobile, lesdits moyens d'actionnement étant portés en partie par la partie fixe et en partie par la partie mobile, et des deuxièmes moyens de commande (C2) des deuxièmes moyens d'actionnement pour effectuer un trimming de l'élément sensible, les deuxièmes moyens d'actionnement (24.1, 24.2, 24.3, 24.4, 124, 124.1, 124.2, 224.1, 224.2, 224.1'n 224.2') comportant avantageusement au moins deux paires d'électrodes, chaque paire comprenant une électrode fixe portée par la partie fixe et une électrode mobile en regard, portée par la partie mobile, tout ou partie des électrodes fixes étant disposées dans ledit logement et tout ou partie des électrodes mobiles étant situées sur les faces internes des parois du logement.

4. Capteur de pression selon la revendication 3, dans lequel les premiers moyens d'actionnement et deuxièmes moyens d'actionnement sont distincts.

5. Capteur de pression selon la revendication 3, dans lequel les premiers et deuxièmes moyens d'actionnement sont confondus, et auxquels est appliqué un signal de polarisation comprenant une composante alternative issue des premiers moyens de commande et une composante continue issue des deuxièmes moyens de commande.

6. Capteur de pression selon l'une des revendications 1 à 5, dans lequel la partie mobile est articulée en rotation par rapport à la partie fixe autour d'un axe perpendiculaire au plan du capteur, l'élément sensible (8, 108,) étant avantageusement articulé au niveau d'au moins une extrémité longitudinale.

7. Capteur de pression selon l'une des revendications 1 à 6, dans lequel les moyens de détection (16, 216) sont soit des moyens de détection piézorésistifs, soit des moyens de détection capacitifs, ces derniers étant avantageusement distincts des premiers et/ou deuxièmes moyens d'actionnement

8. Capteur de pression selon l'une des revendications 1 à 7, dans lequel l'élément sensible (108, 208) comporte un fond (108.1) reliant les deux parois parallèles (18.2, 108.3), ledit fond comportant au moins un passage traversant (44), ledit capteur comportant avantageusement au moins un pilier (46) pour relier mécaniquement au moins une des électrodes fixes (24.1, 24.2) à la partie fixe à travers le passage traversant (44).

9. Capteur de pression selon l'une des revendications 1 à 8, dans lequel au moins une des électrodes d'actionnement (124.1, 124.2) est structurée de sorte à faciliter l'échappement du milieu ambiant de l'espace délimité entre une électrode fixe (1204.1, 124.2) et une électrode mobile.

10. Capteur de pression selon l'une des revendications 1 à 9, dans lequel chaque électrode fixe (24.1, 24.2) est connectée à un plot de connexion électrique au niveau d'une extrémité longitudinale de celle-ci ou à un plot de connexion électrique (42) dans une partie intermédiaire entre les deux extrémités longitudinales de celle-ci.

11. Capteur de pression selon l'une des revendications 1 à 10, dans lequel l'élément sensible (8, 108, 208) est disposé entre au moins une première cavité connectée à l'environnement dont on souhaite mesurer les variations de pression et au moins une deuxième cavité tampon en communication avec la première cavité, ledit capteur comportant avantageusement deux premières cavités distinctes connectées à l'environnement dont on souhaite mesurer la variation de pression et deux deuxièmes cavités tampons et dans lequel l'élément sensible (208) est soumis aux variations de pression des deux cavités.

12. Capteur de pression selon la revendication 11, dans lequel la partie mobile est articulée en rotation par rapport à la partie fixe autour d'un axe perpendiculaire au plan du capteur et dans lequel l'axe de rotation (Z) de l'articulation en rotation se situe entre les deux extrémités longitudinales de l'élément sensible (208), de préférence à égale distance des deux extrémités.

13. Capteur de pression selon la revendication 7, dans lequel les moyens de détection capacitifs comportent deux électrodes disposées à l'extérieur du logement de l'élément sensible, l'une des électrodes est en regard de la face sensible et l'autre électrode est en regard de l'autre face extérieure de l'élément sensible de sorte à réaliser une mesure différentielle

14. Capteur de pression selon la revendication 7, dans lequel les moyens de détection piézorésistifs comportent deux jauges montées en pont de Wheatstone, l'une étant fixée d'un côté de l'élément sensible et l'autre fixée de l'autre côté de l'élément sensible par rapport à l'axe de l'élément sensible, de sorte que, lors du déplacement en rotation, l'une des jauges est comprimée et l'autre est étirée.

15. Capteur de pression selon la revendication 13 ou 14, dans lequel la partie mobile comporte au moins deux poutres parallèles (26) à l'élément sensible (8) et disposées à distance de celui-ci, des faces desdites poutres parallèles (26) face à la face sensible formant tout ou partie des électrodes mobiles, ledit substrat comportant avantageusement un substrat support (2) et un substrat capot (4), la première cavité étant connectée à l'environnement dont on souhaite mesurer les variations de pression par une ouverture du substrat capot, la deuxième cavité comportant une ouverture dans le substrat support à l'opposé de l'ouverture de la première cavité ou une ouverture latérale ou la deuxième cavité présentant un volume suffisant pour ne pas amortir le déplacement de la partie mobile.

16. Capteur de pression selon l'une des revendications 1 à 15 formant un capteur de pression dynamique.

17. Microphone comprenant au moins un capteur de pression selon l'une des revendications 1 à 15.

## Patentansprüche

1. Drucksensor vom Typ MEMS und/oder NEMS, umfassend in einem Substrat, das sich in einer Ebene erstreckt, genannt Ebene des Sensors:
- ein festes Teil und ein bezüglich des festen Teils bewegliches Teil, wobei das bewegliche Teil wenigstens ein empfindliches Element (S, 8, 108, 208) umfasst, das dazu ausgelegt ist, sich unter der Einwirkung einer Druckvariation in der Ebene des Sensors zu verlagern oder zu deformieren,
- Mittel (D, 16, 216) zur Detektion der Verlagerung oder der Deformation des empfindlichen Elements in der Ebene des Sensors aufgrund der Druckvariation, **dadurch gekennzeichnet, dass** der Sensor ferner umfasst:
- erste Mittel (A1, 24.1, 24.2, 24.3, 24.4, 124, 124.1, 124.2, 224.1, 224.2, 224.1'. 224.2') zur Betätigung des beweglichen Teils, wobei die ersten Betätigungsmittel derart gesteuert werden, dass sie die Verlagerung oder die Deformation des empfindlichen Elements (8, 108, 208) in der Position regeln,
erste Mittel (C1) zur Steuerung der ersten Betätigungsmittel, die ausgehend von Signalen konfiguriert sind, die durch die Detektionsmittel emittiert werden, um die ersten Betätigungsmittel derart zu polarisieren, dass die Verlagerung oder die Deformation des empfindlichen Elements in der Position geregelt wird,
wobei die ersten Betätigungsmittel (24.1, 24.2, 24.3, 24.4, 124, 124.1, 124.2, 224.1, 224.2, 224.1'. 224.2') wenigstens zwei Paare von Elektroden umfassen, wobei jedes Paar eine feste Elektrode umfasst, die durch das feste Teil getragen wird, und eine gegenüberliegende bewegliche Elektrode, die durch das bewegliche Teil getragen wird, und
wobei das empfindliche Element (108, 208) eine Fläche umfasst, die den Druckvariationen ausgesetzt ist, genannt empfindliche Fläche, und wenigstens eine Aufnahme (34, 234.1, 234.2) umfasst, die zwischen zwei parallelen Wänden (108.2, 108.3) des empfindlichen Elements begrenzt ist, wobei die eine der parallelen Wände (108.2, 108.3) die empfindliche Fläche trägt, wobei alle oder ein Teil der festen Elektroden der ersten Betätigungsmittel in der Aufnahme (34, 134) angeordnet sind/ist, und alle oder ein Teil der beweglichen Elektroden der ersten Betätigungsmittel auf den Innenflächen (108.22, 108.32) der Wände (18.2, 18.3) der Aufnahme angeordnet sind.

2. Drucksensor nach Anspruch 1, bei dem die ersten Betätigungsmittel (24.1, 24.2, 24.3, 24.4, 124, 124.1, 124.2, 224.1, 224.2, 224.1'. 224.2') vom kapazitiven Typ sind, wobei die Betätigungsmittel teilweise durch das feste Teil und teilweise durch das beweglichen Teil getragen werden.

3. Drucksensor nach Anspruch 1 oder 2, umfassend zweite Betätigungsmittel vom kapazitiven Typ für das bewegliche Teil, wobei die Betätigungsmittel teilweise durch das feste Teil und teilweise durch das bewegliche Teil getragen werden, und zweite Mittel (C2) zur Steuerung der zweiten Betätigungsmittel, um ein Trimming des empfindlichen Elements durchzuführen, wobei die zweiten Betätigungsmittel (24.1, 24.2, 24.3, 24.4, 124, 124.1, 124.2, 224.1, 224.2, 224.1'. 224.2') vorzugsweise wenigstens zwei Paare von Elektroden umfassen, wobei jedes Paar eine feste Elektrode umfasst, die durch das feste Teil getragen wird, und eine gegenüberliegende bewegliche Elektrode, die durch das bewegliche Teil getragen wird, wobei alle oder ein Teil der festen Elektroden in der Aufnahme angeordnet sind/ist, und alle oder ein Teil der beweglichen Elektroden auf den Innenflächen der Wände der Aufnahme angeordnet sind/ist.

4. Drucksensor nach Anspruch 3, bei dem die ersten Betätigungsmittel und die zweiten Betätigungsmittel verschieden sind.

5. Drucksensor nach Anspruch 3, bei dem die ersten und zweiten Betätigungsmittel zusammengefasst sind, und ein Polarisationssignal an sie angelegt wird, das eine alternierende Komponente umfasst, die von den ersten Steuermitteln stammt, und eine kontinuierliche Komponente, die von den zweiten Steuermitteln stammt.

6. Drucksensor nach einem der Ansprüche 1 bis 5, bei dem das bewegliche Teil zur Drehung bezüglich des festen Teils um eine Achse orthogonal zur Ebene des Sensors angelenkt ist, wobei das empfindliche Element (8, 108) vorzugsweise im Bereich wenigstens eines Längsendes angelenkt ist.

7. Drucksensor nach einem der Ansprüche 1 bis 6, bei dem die Detektionsmittel (16, 216) entweder piezoresistive Detektionsmittel oder kapazitive Detektionsmittel sind, wobei letztere vorzugsweise von den ersten und/oder zweiten Betätigungsmitteln verschieden sind.

8. Drucksensor nach einem der Ansprüche 1 bis 7, bei dem das empfindliche Element (108, 208) einen Boden (108.1) umfasst, der die zwei parallelen Wände (18.2, 108.3) verbindet, wobei der Boden wenigstens eine Durchführung (44) umfasst, wobei der Sensor vorzugsweise wenigstens einen Pfeiler (46) umfasst, um wenigstens eine der festen Elektroden (24.1, 24.2) mechanisch mit dem festen Teil durch die Durchführung (44) hindurch zu verbinden.

9. Drucksensor nach einem der Ansprüche 1 bis 8, bei dem wenigstens eine der Betätigungselektroden (124.1, 124.2) derart strukturiert ist, dass sie das Entweichen des umgebenden Mediums aus dem Raum erleichtert, der zwischen einer festen Elektrode (1204.1, 124.2) und einer beweglichen Elektrode begrenzt ist.

10. Drucksensor nach einem der Ansprüche 1 bis 9, bei dem jede feste Elektrode (24.1, 24.2) an einen elektrischen Anschlusspunkt im Bereich eines Längsendes desselben angeschlossen ist, oder an einen elektrischen Anschlusspunkt (42) in einem Zwischenbereich zwischen den zwei Längsenden desselben.

11. Drucksensor nach einem der Ansprüche 1 bis 10, bei dem das empfindliche Element (8, 108, 208) angeordnet ist zwischen wenigstens einem ersten Hohlraum, der mit der Umgebung verbunden ist, deren Druckvariationen man messen möchte, und wenigstens einem zweiten Pufferhohlraum in Verbindung mit dem ersten Hohlraum, wobei der Sensor vorzugsweise zwei verschiedene erste Hohlräume umfasst, die mit der Umgebung verbunden sind, deren Druckvariation man messen möchte, und zwei zweite Pufferhohlräume, und wobei das empfindliche Element (208) den Druckvariationen der zwei Hohlräume ausgesetzt ist.

12. Drucksensor nach Anspruch 11, bei dem das bewegliche Teil zur Drehung bezüglich des festen Teils um eine Achse orthogonal zur Ebene des Sensors angelenkt ist, und wobei die Drehachse (Z) des Drehgelenks sich zwischen den zwei Längsenden des empfindlichen Elements (208) befindet, vorzugsweise in gleichem Abstand von den zwei Enden.

13. Drucksensor nach Anspruch 7, bei dem die kapazitiven Detektionsmittel zwei Elektroden umfassen, die außerhalb der Aufnahme des empfindlichen Elements angeordnet sind, wobei die eine der Elektroden gegenüber der empfindlichen Fläche ist, und die andere Elektrode gegenüber der anderen Außenfläche des empfindlichen Elements ist, derart, dass eine differentielle Messung realisiert wird.

14. Drucksensor nach Anspruch 7, bei dem die piezoresistiven Detektionsmittel zwei Messlehren umfassen, die als Wheatstone-Brücke montiert sind, wobei die eine auf einer Seite des empfindlichen Elements befestigt ist, und die andere auf der anderen Seite des empfindlichen Elements bezogen auf die Achse des empfindlichen Elements befestigt ist, derart, dass während der Rotationsverlagerung die eine der Messlehren komprimiert und die andere gedehnt wird.

15. Drucksensor nach Anspruch 13 oder 14, bei dem das bewegliche Teil wenigstens zwei zum empfindlichen Element (8) parallele Balken (26) umfasst, die in einem Abstand von diesem angeordnet sind, wobei Flächen der parallelen Balken (26) gegenüber der empfindlichen Fläche alle oder einen Teil der beweglichen Elektroden bilden, wobei das Substrat vorzugsweise ein Tragsubstrat (2) und ein Deckelsubstrat (4) umfasst, wobei der erste Hohlraum mit der Umgebung, deren Druckvariationen man messen möchte, durch eine Öffnung des Deckelsubstrats verbunden ist, wobei der zweite Hohlraum eine Öffnung in dem Trägersubstrat entgegengesetzt zur Öffnung des ersten Hohlraums umfasst, oder eine laterale Öffnung, oder wobei der zweite Hohlraum ein ausreichendes Volumen aufweist, um die Verlagerung des beweglichen Teils nicht zu dämpfen.

16. Drucksensor nach einem der Ansprüche 1 bis 15, der einen dynamischen Drucksensor bildet.

17. Mikrofon, umfassend wenigstens einen Drucksensor nach einem der Ansprüche 1 bis 15.

## Claims

1. A MEMS and/or NEMS type pressure sensor comprising in a substrate extending in a plane, called the sensor plane:
- a fixed part and a movable part being movable with respect to the fixed part, the movable part comprising at least one sensitive element (S, 8, 108, 208) able to be moved or deformed in the sensor plane under the effect of a pressure variation,
- detecting means (D, 16, 216) for detecting the movement or deformation of the sensitive element in the sensor plane due to the pressure variation, **characterized in that** the sensor also comprises:
- first actuating means (A1, 24.1, 24.2, 24.3, 24.4, 124, 124.1, 124.2, 224.1, 224.2, 224.1', 224.2') for actuating the movable part, said first actuating means being controlled so as to slave in position the movement or the deformation of the sensitive element (8, 108, 208),
first controlling means (C1) for controlling the first actuating means which are configured, from signals emitted by the detecting means, to polarize the first actuating means so as to slave in position the movement or the deformation of the sensitive element,
wherein the first actuating means (24.1, 24.2, 24.3, 24.4, 124, 124.1, 124.2, 224.1, 224.2, 224.1'n 224.2') comprise at least two pairs of electrodes, each pair comprising a fixed electrode carried by the fixed part and a movable electrode facing it, carried by the movable part, and
wherein the sensitive element (108, 208) comprises a face subject to the pressure variations, called the sensitive face, and comprises at least one housing (34, 234.1, 234.2) delimited between two parallel walls (108.2, 108.3) of the sensitive element one of the parallel walls (108.2, 108.3) carrying the sensitive face, all or part of the fixed electrodes of the first actuating means being disposed in said housing (34, 134) and all or part of the movable electrodes of the first actuating means being located on the inner faces (108.22, 108.32) of the walls (18.2, 18.3) of the housing.

2. The pressure sensor according to claim 1, wherein the first actuating means (24.1, 24.2, 24.3, 24.4, 124, 124.1, 124.2, 224.1, 224.2, 224.1', 224.2') are of the capacitive type, said actuating means being carried partly by the fixed part and partly by the movable part.

3. The pressure sensor according to claim 1 or 2, comprising second capacitive type actuating means for actuating the movable part, said actuating means being carried partly by the fixed part and partly by the movable part, and second controlling means (C2) for controlling the second actuating means to perform trimming of the sensitive element, the second actuating means (24.1, 24.2, 24.3, 24.4, 124, 124.1, 124.2, 224.1, 224.2, 224.1'n 224.2') comprising in particular at least two pairs of electrodes, each pair comprising a fixed electrode carried by the fixed part and a movable electrode facing it, carried by the movable part, all or part of the fixed electrodes being disposed in said housing and all or part of the movable electrodes being located on the inner faces of the walls of the housing.

4. The pressure sensor according to claim 3, wherein the first actuating means and second actuating means are distinct.

5. The pressure sensor according to claim 3, wherein the first and second actuating means coincide, and to which a polarization signal is applied comprising an AC component from the first controlling means and a DC component from the second controlling means.

6. The pressure sensor according to one of claims 1 to 5, wherein the movable part is rotatably hinged relative to the fixed part about an axis perpendicular to the sensor plane, the sensitive element (108, 208) being in particular hinged at at least one longitudinal end.

7. The pressure sensor according to one of claims 1 to 6, wherein the detecting means (16, 216) are chosen from piezoresistive type or capacitive type means, the detecting means of the capacitive type being in particular distinct from the first and/or second actuating means.

8. The pressure sensor according to one of claims 1 to 7, wherein the sensitive element (108, 208) comprises a bottom (108.1) connecting both parallel walls (18.2, 108.3), said bottom comprising at least one through passage (44), said sensor comprising in particular at least one pillar (46) for mechanically connecting at least one of the fixed electrodes (24.1, 24.2) to the fixed part through the through passage (44).

9. The pressure sensor according to one of claims 1 to 8, wherein at least one of the actuating electrodes (124.1, 124.2) is structured so as to facilitate exhaust of ambient medium from the space delimited between a fixed electrode (1204.1, 124.2) and a movable electrode.

10. The pressure sensor according to one of claims 1 to 9, wherein each fixed electrode (24.1, 24.2) is connected to an electrical connection pad at a longitudinal end thereof or to an electrical connection pad (42) in an intermediate part between both longitudinal ends thereof.

11. The pressure sensor according to one of claims 1 to 10, wherein the sensitive element (8, 108, 208) is disposed between at least one first cavity connected to the environment the pressure variations of which are desired to be measured and at least one second buffer cavity connected to the first cavity, said sensor comprising in particular two first distinct cavities connected to the environment the pressure variation of which is desired to be measured ,and two second buffer cavities and wherein the sensitive element (208) is subject to pressure variations of both cavities.

12. The pressure sensor according to claim 11 in combination with claim 7, wherein the axis of rotation (Z) of the rotating hinge is located between both longitudinal ends of the sensitive element (208), preferably at an equal distance from both ends.

13. The pressure sensor according to claim 7, wherein the capacitive detecting means comprise two electrodes arranged outside the housing of the sensitive element, one of the electrodes faces the sensitive face and the other electrode faces the other exterior face of the sensitive element so as to allow a differential measurement.

14. The pressure sensor according to claim 7, wherein the piezoresistive detection means comprise two gauges mounted in a Wheatstone bridge, one being fixed on one side of the sensitive element and the other being fixed on the other side of the sensitive element with respect to the axis of the sensitive element so that, during the rotational movement, one of the gauges is compressed and the other is stretched.

15. The pressure sensor according to claim 13 or 14, wherein the movable part comprises at least two beams (26) parallel to the sensitive element (8) and disposed remote from the same, faces of said parallel beams (26) facing the sensitive face forming all or part of the movable electrodes, said substrate comprises in particular a support substrate (2) and a cap substrate (4), the first cavity being connected to the environment the pressure variations of which are desired to be measured through an aperture of the cap substrate, the second cavity comprising an aperture in the support substrate opposite the aperture of the first cavity or a side aperture or the second cavity having a sufficient volume not to damp the movement of the movable part.

16. The pressure sensor according to one of claims 1 to 15, forming a dynamic pressure sensor.

17. A microphone comprising at least one pressure sensor according to one of claims 1 to 15.
